# EUROPEAN PATENT SPECIFICATION

(11) **EP 2 767 511 B1**
(45) Date of publication and mention of the grant of the patent: **14.12.2016**
(21) Application number: 13382051.4
(22) Date of filing: 19.02.2013
(51) Int. Cl.: C01B 31/04

(54) **PROCESS FOR OBTAINING A UNIFORM DISPERSION OF GRAPHENE PLATELETS IN A LIQUID**
VERFAHREN ZUM ERHALT EINER GLEICHFÖRMIGEN DISPERSION VON GRAPHENPLÄTTCHEN IN EINER FLÜSSIGKEIT
PROCÉDÉ PERMETTANT D'OBTENIR UNE DISPERSION UNIFORME DE PLAQUETTES DE GRAPHÈNE DANS UN LIQUIDE

(43) Date of publication of application: 20.08.2014
(73) Proprietor: Grupo Antolín Ingeniería, S.A., 09007 Burgos (ES)
(72) Inventor: Merino Sánchez, César, 09007 BURGOS (ES); Merino Amayuelas, María del Pilar, 09007 BURGOS (ES); Vázquez Fernández-Pacheco, Ester, 13071 Ciudad Real (ES); León Castellanos, Verónica, 13071 Ciudad Real (ES); Del Río Castillo, Antonio Esaú, 13071 Ciudad Real (ES)
(74) Representative: Capitán García, Maria Nuria

(56) References cited:
- EP-A1- 2 489 632
- GENG, JIANXIN ET AL: "Preparation of graphene relying on porphyrin exfoliation of graphite", CHEMICAL COMMUNICATIONS (CAMBRIDGE, UNITED KINGDOM) , 46(28), 5091-5093 CODEN: CHCOFS; ISSN: 1359-7345, 2010, XP002700022,
- ISAAC CHILDRES ET AL: "Effect of oxygen plasma etching on graphene studied using Raman spectroscopy and electronic transport measurements", NEW JOURNAL OF PHYSICS, INSTITUTE OF PHYSICS PUBLISHING, BRISTOL, GB, vol. 13, no. 2, 1 February 2011 (2011-02-01), page 25008, XP020187110, ISSN: 1367-2630, DOI: 10.1088/1367-2630/13/2/025008
- VARELA-RIZO H ET AL: "Highly crystalline graphene oxide nano-platelets produced from helical-ribbon carbon nanofibers", CARBON, ELSEVIER, OXFORD, GB, vol. 48, no. 12, 1 October 2010 (2010-10-01), pages 3640-3643, XP027142644, ISSN: 0008-6223 [retrieved on 2010-05-24]
- TOMAI TAKAAKI ET AL: "Nanographene production from platelet carbon nanofiber by supercritical fluid exfoliation", APPLIED PHYSICS LETTERS, AIP, AMERICAN INSTITUTE OF PHYSICS, MELVILLE, NY, US, vol. 100, no. 23, 4 June 2012 (2012-06-04) , pages 233110-233110, XP012156474, ISSN: 0003-6951, DOI: 10.1063/1.4726113 [retrieved on 2012-06-05]
- DATABASE CA [Online] CHEMICAL ABSTRACTS SERVICE, COLUMBUS, OHIO, US; ZHANG, GUANGYU ET AL: "Method for anisotropic etching of graphite or graphene", XP002700023, retrieved from STN Database accession no. 154:448762 & CN 101 996 853 A (INSTITUTE OF PHYSICS, CHINESE ACADEMY OF SCIENCES, PEOP. REP. CHINA) 30 March 2011 (2011-03-30)
- LONG D ET AL: "Fabrication of uniform graphene discs via transversal cutting of carbon nanofibers", ACS NANO 20110823 AMERICAN CHEMICAL SOCIETY USA, vol. 5, no. 8, 23 August 2011 (2011-08-23) , pages 6254-6261, XP002700024, DOI: 10.1021/NN201195G
- LUO J ET AL: "Graphene oxide nanocolloids", JOURNAL OF THE AMERICAN CHEMICAL SOCIETY 20101222 AMERICAN CHEMICAL SOCIETY USA, vol. 132, no. 50, 22 December 2010 (2010-12-22), pages 17667-17669, XP002700025, DOI: 10.1021/JA1078943
- DATABASE WPI Week 201331 Thomson Scientific, London, GB; AN 2012-M72891 XP002700026, & CN 102 583 351 A (CHINESE ACAD SCI NINGBO INST MATERIAL TE) 18 July 2012 (2012-07-18)

## Description

### TECHNICAL FIELD OF THE INVENTION

The present invention relates to a process for obtaining a uniform dispersion of graphene platelets in a liquid.

The invention is characterised by a process for obtaining a uniform dispersion of graphene platelets in a liquid that is carried out avoiding the use of oxidising agents, such as those used to cause intercalation and exfoliation processes, which are generally hazardous and hard to control, and avoiding the use of surfactants to prevent the aggregation of the particles obtained.

The invention is also characterised by the use of a base paste for obtaining a dispersion of graphene platelets in a liquid that comprises carbon nanofibers, intercalant powder and ligand liquid, wherein the carbon nanofibers have a structure in the form of a continuous helical ribbon developing a spiral around and along the main axis of each carbon nanofiber, where said ribbon comprises a stacking of a small number of graphitic layers.

The invention is also characterised by the application of shear and compressive strengths on the base paste that favour the fragmentation, intercalation and exfoliation of the carbon nanofibers contained in it.

The invention is also characterised by the application of energy using a physical process to obtain a uniform dispersion of graphene platelets in a liquid.

### BACKGROUND OF THE INVENTION

Graphene is a two-dimensional crystalline material with unique electronic properties with respect to the stacking of many of these layers, as in graphite.

Stacks of up to ten graphitic layers are considered to present electronic properties sufficiently unique and similar to those of pristine graphene to make them interesting from an industrial point of view.

In practice, the term graphene can be used to identify graphitic materials formed by stacks of up to ten graphitic layers, so that the term graphene is admitted when the number of stacked layers is less than eleven, and preferably for stacks of fewer than six layers.

One of the known methods for the synthesis of graphene is, for example, chemical vapour deposition (CVD). With this process graphene is obtained by chemical deposition in vapour phase of hydrocarbons on a metallic substrate.

This technique described for the synthesis of graphene is performed on small scale to obtain small amounts, for example for use in laboratories.

Currently, to produce large amounts of graphene, such as for industrial use, it is common to use chemical etching methods followed by an exfoliation by thermal processes or ultrasound.

These chemical methods for obtaining graphene use graphite as precursor material and begin by oxidising graphite to obtain graphite oxide.

In graphite oxide, the graphitic layers are corrugated by the high oxidation degree achieved (formation of epoxy, hydroxyl, carboxyl groups, etc.), separating the layers until at least doubling the interplanar distance, thereby simplifying the subsequent exfoliation.

The graphite oxide exfoliation process for obtaining graphene oxide consists of supplying energy, normally in a liquid medium, by applying ultrasounds, heat treatments or microwaves, in order to obtain graphene nanoplatelets with a single or few number of graphitic layers.

In the last five years the advantages of synthesising graphene from carbon nanotubes have been demonstrated, said carbon nanotubes have fewer stacked graphitic layers than graphite, thereby being a precursor material of higher quality.

In this sense, Kosynkin et al., starting with carbon nanotubes as the precursor material for obtaining graphene nanoribbons, present a new oxidation process based on the method of Hummers and Offermann.

This process consists of a chemical oxidation process for producing graphene nanoribbons by longitudinal cutting and unwinding of the layers that make up the carbon nanotubes, where said carbon nanotubes can be multiwall, double wall or single wall.

This process for making graphene nanoribbons is illustrated in patent WO201022164.

In addition, these nanotubes present defects in their structure at an atomic scale, due to the degradation suffered in the aggressive oxidation processes needed to overcome the difficulty of cutting and separating the graphitic layers that form the carbon nanotubes.

To separate the graphitic layers forming the carbon nanotubes, chemical etching is performed through their basal plane edges.

Carbon nanotubes only have basal plane edges at their two ends. Therefore, to cut and separate the graphitic layers that form these carbon nanotubes, it is necessary to perform aggressive chemical etching with high energy contribution, causing their degradation in addition to their exfoliation.

This implies a low productivity of the process for obtaining graphene nanoribbons from carbon nanotubes, as well as a loss of quality and the irregularity of the structures obtained.

To improve the productivity of the process for obtaining graphene or graphene oxide nanostructures and their regularity, document EP2489632A1 of the same applicant is known relating to a process for obtaining graphene oxide nanoplatelets from carbon nanofilaments with a special continuous spiral configuration, and by using chemical substances to exfoliate them.

This special continuous spiral configuration of the carbon nanofilaments comprises a large number of basal plane edges through which it is carried out the separation of the graphitic layers that form them.

In this way, the chemical etching needed to separate the graphitic layers that form the carbon nanofilaments is less aggressive and requires less energy than in the case of carbon nanotubes, so that less degradation occurs, and consequently the productivity of the process for obtaining graphene from these carbon nanofilaments is higher than that of the process using carbon nanotubes as precursor material.

On another hand, due to the reduced aggression of said chemical etching, the structure of the nanoplatelets obtained is more regular, moreover the graphene oxide nanoplatelets obtained are larger and with smaller aspect ratio.

However, the process for obtaining graphene oxide nanoplatelets from the continuous spiral carbon nanofilaments described in document EP2489632A1 of the same applicant, as previous methods, is also based on the exfoliation of the carbon nanofilaments using chemical etching in which oxidising agents are used.

Therefore, in all of these methods of the prior art there is a degradation of the graphitic structure of the graphitic materials obtained, due to the oxidising methods employed, which lowers the productivity of the production process.

In addition, this type of processes based on using oxidising agents results in the production of graphene oxide instead of graphene. Although there are methods described for obtaining reduced graphene oxide from graphene oxide, its properties and quality are different from those of graphene.

An additional drawback is the natural tendency of graphitic materials to agglomerate, forming aggregates that hinder handling and subsequent use.

To prevent the formation of these aggregates it is common to maintain the graphitic materials dispersed in a liquid medium with the help of surfactants that aid their uniform and stable dispersion in said medium.

Therefore, the object of the invention is a process for obtaining a dispersion of high-quality graphene platelets in a liquid, at an industrial scale, that also avoids the need for additional substances that increase the complexity and cost of the production process such as oxidising agents that may degrade the graphitic layers, thereby affecting the quality of the graphene platelets obtained, and are also hazardous and difficult to handle, or surfactants that aid and stabilise the dispersion of the platelets obtained in a liquid medium.

### DESCRIPTION OF THE INVENTION

In view of the foregoing, the present invention relates to a process for obtaining a uniform dispersion of graphene platelets in a liquid, said process comprising the following stages;
a) obtaining a base paste by arranging and dosing the following materials:
   i. carbon nanofibers in the form of dry powder, the structure of which comprises a continuous helical graphitic ribbon developing a spiral around and along the main axis s of each carbon nanofiber, where said ribbon is formed by a stacking of less than eleven graphitic layers,
   ii. intercalant powder,
   iii. a first ligand liquid,
   where the upper limit of the liquid-solid ratio expressed as ml of liquid per mg of solid is 0.5 ml for every 1 mg and the lower limit of the liquid-solid ratio expressed as ml of liquid per mg of solid is 0.01 ml for every 1 mg,
b) fragrnenting, intercalating and exfoliating the carbon nanofibers that form the base paste obtained in stage a), by a combined application of compressive and shear strengths to obtain a modified base paste that comprises graphene platelets,
c) adding a second liquid to the modified base paste that comprises graphene platelets to obtain a dispersion of graphene platelets in said second liquid,
d) providing energy by a physical process to the dispersion of graphene platelets in said second liquid obtained in stage c), to obtain an uniform graphene platelet dispersion in a second liquid wherein said second liquid
   ∘ acts as a transmission medium for the energy supplied in stage d), thereby favouring the transmission of this energy to allow homogenising the graphene platelet dispersion in a second liquid and,
   ∘ stops the graphene platelets from joining again after they have been exfoliated, due to the affinity between said second liquid and the graphitic materials in such a way that the graphene platelets in dispersion are more stable than agglomerated graphene platelets, preventing the attraction between them and consequently their agglomeration,
   wherein
   the intercalant powder:
   - is introduced between the graphitic layers that form them and by their basal plane edges in order to exfoliate carbon nanofibers,
   - has an energy of adsorption with respect to the carbon nanofibers greater than that of benzene with respect to said carbon nanofibers,
   the first ligand liquid:
   - is such that the energy of solvation of the intercalant powder in the first liquid is lower than the energy of adsorption of the intercalant powder in the graphitic layers of the carbon nanofibers, that is, the first liquid exhibits a lower affinity for the intercalant powder than that of the latter for the graphitic layers of the carbon nanofibers,
   - has a surface tension, γL, with a value from 20 to 35 mJ/m2 and a Hildebrand solubility parameter, δT, with a value from 18 to 30 MPa1/2 at 25°C, the second liquid :
   - has an affinity to the intercalant powder (1.2) lower than that of the latter to the graphitic layers of the carbon nanofibers, that is, the energy of solvation of the intercalant powder (1.2) in the first liquid (3) is less than the energy of adsorption of the intercalant powder (1.2 in the graphitic layers that form the graphene platelets (4),
   - has a surface tension, γL, with a value from 20 to 35 mJ/m2 and a Hildebrand solubility parameter, δT, with a value from 18 to 30 MPa1/2 (equivalent to j/cm3; 2.0455 × (cal/cc) 1/2 at 25°C,
   an wherein the graphene platelets of the uniform graphene platelet dispersion in a second liquid obtained in stage d) corresponding to a Raman spectrum that includes:
   - a G peak,
   - a D peak,
   - a 2D peak,
   where the ratio of the maximum value of the D peak with respect to that of the G peak is from 0.14 to 0.95 and the ratio of the maximum value of the G peak with respect to that of the 2D peak is from 0.25 to 4.

Optionally, in some cases a preliminary treatment can be performed on the carbon nanofibers used as precursor material to obtain the base paste, exposing them to a high temperature in a controlled atmosphere in order to improve, purify and increase the quality of said carbon nanofibers and consequently that of the graphene platelets obtained thereby.

In the liquid-solid ratio expressed in ml of liquid per mg of solid described above, the solid part of the ratio refers to the total amount of carbon nanofibers and intercalant powder used to form the base paste.

The process of the invention for obtaining a graphene platelet dispersion in a liquid is based on the use of a base paste formed by carbon nanofibers with a special continuous helical configuration, intercalant powder and a ligand liquid.

The quality of the graphene platelets is directly related to the number of stacked layers of graphitic material that form them, the absence of structural defects, and their size.

One of the most important parameters that define the quality of the graphene platelets is the number of graphitic layers that form them, which has an inversely proportional relationship with their quality. Thus, the fewer graphitic layers there are the better the quality of the product obtained, as its properties will be closer to those of pristine graphene.

Similarly, the properties of the graphene platelets are related to their size and their structural defects, so that high-quality platelets will have a large size and a minimum number of structural defects.

Firstly, the use of carbon nanofibers to form the base paste used as precursor material helps to obtain high-quality graphene platelets.

As the process of the invention for obtaining the graphene platelet dispersion in a liquid uses as precursor material carbon nanofibers with a low number of graphitic layers in their structure, the result is the production of graphene platelets with an equally low number of graphitic layers. That is, it helps obtaining high-quality graphene platelets.

Since the carbon nanofibers used as precursor material are a high-quality material with a low number of structural defects, the obtaining of a resulting product that also has a low number of structural defects is helped.

On another hand, the special configuration of the carbon nanofibers in a structure with a high number of basal plane edges helps their intercalation, reducing the risk that the process will increase the number of structural defects in the final product.

Another material used to form the base paste is the intercalant powder.

This intercalant powder facilitates the exfoliation process of the carbon nanofibers, as when the amount of intercalate that accesses through the basal plane edges and is adsorbed on the graphitic layers increases, the forces that bind said graphitic layers are weakened, thereby reducing the energy needed to separate them and facilitating their subsequent exfoliation without degradation.

To improve the access of the intercalant powder to the basal plane edges of the graphitic layers that form the carbon nanofibers in order to aid the introduction of the intercalant powder between the graphitic layers, a certain amount of a first liquid is used.

An important feature of this first liquid is its affinity to both the graphitic materials and the intercalant powder, acting as a facilitator of the adsorption of said intercalate on the surface of the graphitic layers.

The amount of first liquid is such that it is enough to improve the diffusion and contact of the intercalant powder with the basal plane edges of the carbon nanofibers that form the base paste, while not so much that it will prevent the dispersion of the intercalant powder and the carbon nanofibers resulting in their excessive separation, which would reduce the likelihood of intercalation.

The exfoliation of the carbon nanofibers is performed by first introducing the intercalant powder in the interplanar space between the graphitic layers of said carbon nanofibers, followed by the adsorption of the intercalant powder on the surface of said graphitic layers.

The greater the amount of intercalant powder introduced and adsorbed between the graphitic layers that form the carbon nanofibers, the lower the energy that binds them to each other.

More the amount of intercalant powder can be introduced between the graphitic layers the greater the amount of intercalant powder near the basal plane edges of the carbon nanofibers.

A suitable amount of the first liquid allows maintaining a sufficiently high concentration so that there is a large amount of intercalant powder near the basal plane edges, and facilitating its adsorption on the graphitic layers.

As the intercalant powder is introduced between the graphitic layers, the separation between them increases and consequently the forces that keep them together are reduced.

Lower binding forces imply that less energy is needed to separate the graphitic layers from each other, avoiding the need to use aggressive exfoliation methods such as those involving oxidising agents.

The exfoliation process employing intercalant powder therefore implies a reduced deterioration of the carbon nanofibers and thus a productivity yield of the process and the quality of the graphene platelets obtained.

In addition, graphene platelets tend to form agglomerates that hinder their handling or correct dispersion for future uses.

To prevent this agglomeration, the process of the invention comprises a stage in which energy is supplied by a physical process to the graphene platelets, after adding a second liquid, so that a uniform dispersion is obtained of said graphene platelets in said second liquid.

This prevents the agglomeration of graphene platelets without the need for surfactants.

Consequently, the process of the invention produces graphene platelets with a low number of layers, on one hand because the number of graphitic layers of the precursor material is already low, and on the other hand because of the combined effect of using the intercalant powder and the first liquid in the exfoliation performed in stage b).

Similarly, the number of structural defects in the graphene platelets obtained is low due to the low degradation of these platelets resulting from the combined effect of using a precursor material with a low number of structural defects and an exfoliation method that is not very aggressive.

This low degradation reduces the fragmentation of the carbon nanofibers, resulting in larger graphene platelets.

The graphene platelets obtained by the process of the invention according to the aforementioned features respond to a Raman spectrum characterised by having 3 peaks:
- a G peak characteristic of graphitic materials,
- a D peak characteristic of carbonaceous materials with a maximum value that is proportional to the number of structural defects of the graphitic layers,
- a 2D peak characteristic of graphitic materials proportional to the number of graphitic layers, such that its maximum value increases the fewer the number of graphitic layers,
where the ratio of the maximum intensity value of the D peak with respect to that of the G peak is from 0.14 to 0.95 and the ratio of the maximum intensity value of the G peak with respect to that of the 2D peak is from 0.25 to 4.

In addition, an optional preliminary treatment can be carried out during the production process involving graphitisation of the carbon nanofibers that form the base paste by exposing them to high temperatures in order to purify, dehydrogenate, defunctionalise and crystallise said carbon nanofibers, resulting in carbon nanofibers with a highly crystalline structure.

In this way the carbon nanofibers are purified, eliminating among other impurities polycyclic aromatic hydrocarbons, amorphous carbon and other undesired compounds that may be present in the carbon nanofibers, thereby increasing the crystallinity of their structure as a result of the defunctionalisation and dehydrogenation processes.

Therefore, and due to the effect of these processes originated by exposing the carbon nanofibers to a heat treatment, a modified structure is obtained for the carbon nanofibers in which the impurities have been eliminated and the number of carbon-carbon bonds is increased.

This highly crystalline structure of the carbon nanofibers after subjecting them to the heat treatment increases the number of basal plane edges of the carbon nanofibers, aiding the subsequent entry of the intercalant powder and the subsequent exfoliation of the carbon nanofibers.

### BRIEF DESCRIPTION OF THE FIGURES

This specification is supplemented with a set of drawings illustrating the preferred embodiment, which are never intended to limit the invention.
Figure 1 represents a flow chart of the process for obtaining a dispersion of graphene platelets in a liquid.

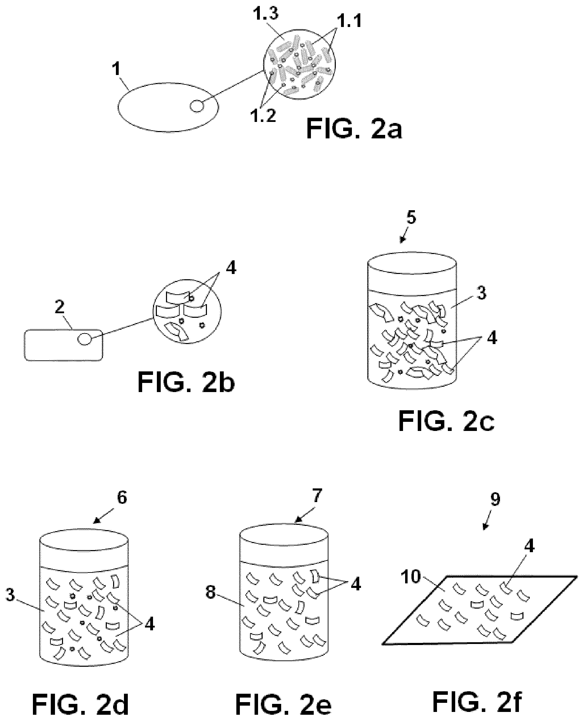

Figures 2a, 2b, 2c, 2d, 2e and 2f show schematic representations of the different products obtained in each stage of the production process.
   Specifically, figure 2a represents the base paste obtained in stage a) of the process from carbon nanofibers in the form of dry powder, intercalant powder and a first ligand liquid.
Figure 2b represents the modified base paste comprising graphene platelets obtained in stage b) of the process.
Figure 2c represents a dispersion of graphene platelets in a second liquid obtained in stage c) of the process.
Figure 2d represents a uniform dispersion of graphene platelets in the second liquid obtained in stage d) of the process.
Figure 2e represents a third dispersion of graphene platelets in a third liquid obtained in stage h) of the process.
Figure 2f represents a graphene platelet coating on a support obtained in stage i) of the process.
Figure 3 is a schematic representation of the process for obtaining the carbon nanofibers with a continuous helical graphitic layers configuration.
Figure 4 represents a TEM image of the graphene platelets obtained, showing the size of said graphene platelets and their transparency associated to a low number of layers and a low number of structural defects.
Figure 5 shows a Raman spectrum of a sample of the graphene platelets obtained according to the process of the invention.

### DETAILED DESCRIPTION OF THE PREFERRED EMBODIMENT OF THE INVENTION

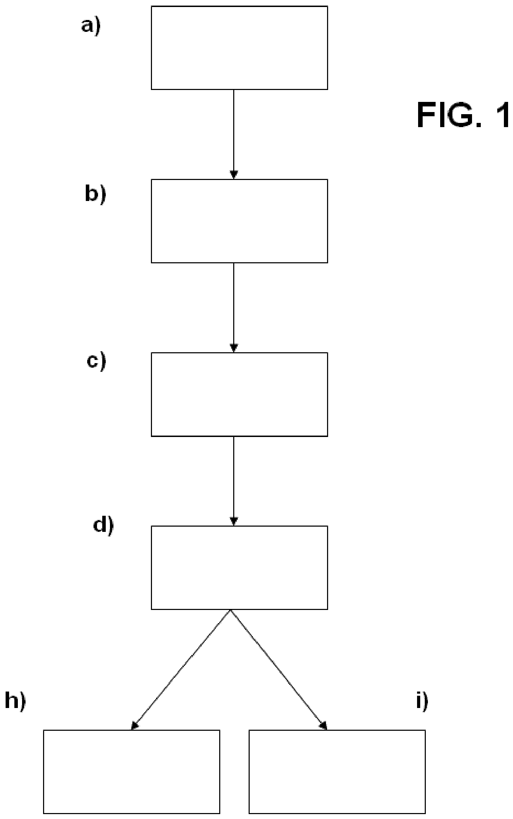

The process of the invention for obtaining a uniform dispersion of graphene platelets in a liquid, represented schematically in figure 1, starts with stage a) for obtaining a base paste (1) by arranging and dosing the following materials:
i. carbon nanofibers (1.1) in the form of dry powder, the structure of which comprises graphitic layers forming a continuous helical ribbon developing a spiral around and along the main axis 's' of each carbon nanofiber, where said ribbon comprises a stacking of less than eleven graphitic layers,
ii. intercalant powder (1.2),
iii. a first ligand liquid (1.3) that aids the adsorption of the intercalant powder between the graphitic layers of the carbon nanofibers (1.1),

The dosing of said materials is performed according to the following ratios:
- Liquid-solid ratio expressed as ml of liquid per mg of solid is 0.5 ml for every 1 mg and the lower limit of the liquid-solid ratio expressed as ml of liquid per mg of solid is 0.01 ml for every 1 mg,,
- Ratio of carbon nanofibers to intercalant powder expressed in mg having an upper limit of 1 mg of carbon nanofibers for every 50 mg of intercalant powder and a lower limit of 1 mg of carbon nanofibers for every 0.5 mg of intercalant powder.

The use of carbon nanofibers (1.1) as precursor material allows obtaining high-quality graphene platelets (4) due to the low number of stacked graphitic layers in its structure, fewer than 11, and the few structural defects generated in the structure of the layers during the production process.

In this way, when the exfoliation process of the carbon nanofibers (1.1) takes place, stage b), the number of graphitic layers comprising the structure of the graphene platelets (4) obtained will necessarily be fewer than that of said carbon nanofibers (1.1).

In addition, due to the high number of basal plane edges (1.1.1) of the structure of the carbon nanofibers (1.1), the intercalant powder (1.2) can access the interplanar spaces, favouring the exfoliation or separation of the graphitic layers comprising said carbon nanofibers (1.1).

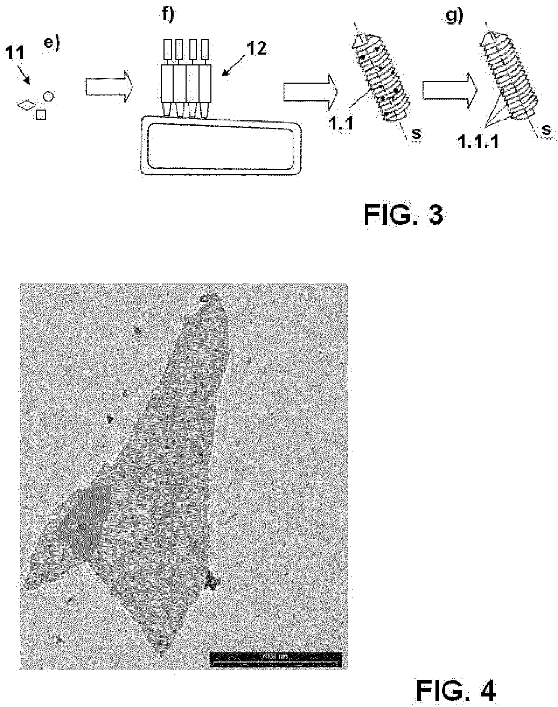

Said carbon nanofibers (1.1), as shown in figure 3, can be obtained from a previous process comprising a stage e) for dosing at least the following compounds (11):
iv. a hydrocarbon or mixture of hydrocarbons,
v. a nickel compound and a sulphur compound to generate catalytic particles
vi. a carrier gas.

After dosing the aforementioned compounds (11), stage e), they are introduced in a furnace (12) according to a process such as that described in patent EP1990449 of the same applicant.

The carbon nanofibers (1.1) are produced in this furnace (12) by a chemical vapour deposition process at a working temperature between 900°C and 1500°C using the floating catalyst method.

With the process conditions and the starting compounds (11) described above, carbon nanofibers (1.1) are obtained with a structure comprising a continuous helical ribbon of graphitic layers developing a spiral around and along the main axis 's' of each carbon nanofiber (1.1), where said ribbon comprises a stacking of less than eleven graphitic layers.

The use of catalytic particles formed by a compound of nickel and sulphur results in a high nucleation and a fast and high-quality growth of the carbon nanofibers (1.1).

Optionally, after obtaining the carbon nanofibers (1.1) and in order to improve their quality, it is possible to carry out a stage g) of graphitisation consisting in a heat treatment of the carbon nanofibers (1.1) exposing them to a temperature of 1500°C to 3000°C, in an inert atmosphere, for purification, defunctionalisation and crystallisation of said carbon nanofibers (1.1), resulting in a higher-quality modified structure in which the number of carbon-carbon bonds is increased with respect to the number of said bonds present in the carbon nanofibers (1.1).

In this way, as described in patent EP2489632 A1 by the same applicant, the quality of the carbon nanofibers (1.1) obtained is improved by eliminating impurities, thereby obtaining high-quality graphene platelets (4) from the same with a low number of layers, few structural defects in the graphitic layers, and a large size.

Another material used to form the base paste (1) is the intercalant powder (1.2).

As anticipated above, the carbon nanofibers (1.1) are exfoliated by introducing the intercalant powder (1.2) between the graphitic layers that form them and by their basal plane edges (1.1.1).

Said intercalant powder (1.2) facilitates the exfoliation process of the carbon nanofibers (1.1) as once the intercalant powder (1.2) has been introduced between the graphitic layers that form the carbon nanofibers (1.1) and is adsorbed by them, the forces that keep together said graphitic layers are reduced, thereby reducing the energy needed to separate said graphitic layers and simplifying their subsequent exfoliation, avoiding the need to use aggressive methods in the process such as oxidising reactions.

Therefore, the exfoliation process by the use of intercalant powder (1.2) prevents the use of oxidising reagents that would degrade the graphene platelets (4) obtained, and facilitates the production of high-quality graphene platelets (4).

For the intercalant powder (1.2) to access the interior of the carbon nanofibers (1.1) and be adsorbed by their graphitic layers, it must have an energy of adsorption with respect to the carbon nanofibers (1.1) greater than that benzene with respect to said carbon nanofibers (1.1).

In view of the above, the intercalant powder (1.2) comprises a compound selected from among the family of aromatic heterocyclic compounds, and more specifically from the group of triaminopyrimidines, pyrenes, porphyrins, perylenes, triazines or any of their derived compounds.

Within the group of triazines, the intercalant powder (1.2) can comprise a melamine represented by the chemical formula:

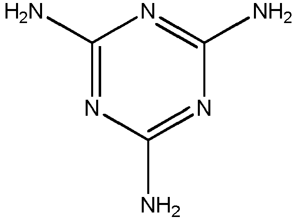

Also within the group of triazines, the intercalant powder (1.2) can comprise a functionalised melamine represented by the chemical formula:

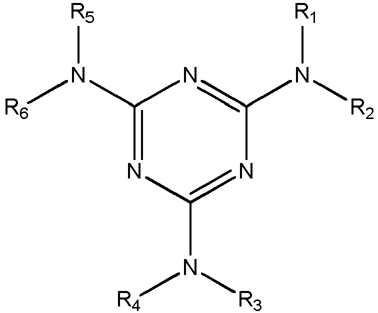

Where R₁, R₂, R₃, R₄, R₅ and R₆ can be hydrogen or any aliphatic or aromatic substituent.

In addition, within the group of triaminopyridimines, the intercalant powder (1.2) can comprise a complex of the triaminopyridimines and a derivative of barbituric acid.

Finally, the third material comprising the base paste (1) is a first ligand liquid (1.3) that acts to improve the adsorption of the intercalant powder (1.2) between the graphitic layers of the carbon nanofibers (1.1), forming the base paste (1) by dosing said ligand liquid (1.3) in an appropriate amount.

Both the productivity of the process and the quality of the product obtained from it depend on the solubility of the intercalant powder (1.2) in the first liquid (1.3), the affinity of the intercalant powder (1.2) to the graphitic layers forming the carbon nanofibers (1.1).

On one hand, the solubility of the intercalant powder (1.2) in the liquid (1.3, 3, 8) is determined by their energy of solvation.

On another hand, the affinity of the intercalant powder (1.2) and the graphitic layers that form the carbon nanofibers (1.1) or the graphene platelets (4), as the case, is determined by their energy of adsorption between them.

When forming the base paste (1), the first liquid ligand used presents an affinity to the intercalant powder (1.2) lower than that of the latter to the graphitic layers of the carbon nanofibers (1.1), that is, the energy of solvation of the intercalant powder (1.2) in the first liquid (3) is lower than the energy of adsorption of the intercalant powder (1.2) in the graphitic layers that form the carbon nanofibers (1.1).

This allows favouring the introduction of the intercalant powder (1.2) between the graphitic layers that form the carbon nanofibers (1.1) through their basal plane edges (1.1.1) and its subsequent adsorption.

The first ligand liquid (1.3) that favours the adsorption of the intercalant powder (1.2) on the graphitic layers of the carbon nanofibers (1.1) has a surface tension, γ_{L}, with a value from 20 to 35 mJ/m2 and a Hildebrand solubility parameter at 25°C, δ_{T}, of 18 to 30 MPa^{1/2}.

In view of these properties, some examples of liquids that can be used to form the base paste (1) are N,N-dimethylformamide (DMF), tetrahydrofuran (THF) and isopropanol (IPA).

After dosing the materials described above in the appropriate ratios, they are mixed to form the base paste (1) itself.

This mixing can be carried out before stage b), or during said stage b) for fragmenting, intercalating and exfoliating the base paste (1), so that stage a) and stage b) are performed simultaneously and using the same means, as will be explained in detail further below.

The use of a base paste (1) to obtain graphene platelets (4) with these features, in which the proportion of the liquid (1.3) is controlled so that this amount is enough to improve the contact of the solid elements (1.1, 1.2) that form the base paste (1) and not too much to cause the opposite effect, that is, the dispersion of said elements reducing their contact, hindering the entry and adsorption of the intercalant powder (1.2) in the graphitic layers that form the carbon nanofibers (1.1).

Consequently, the use of a base paste (1) favours the exfoliation process without the need to use aggressive methods in the process, such as oxidising reactions.

Said oxidising reactions degrade the carbon nanofibers (1.1), reducing the quality of the graphene platelets (4) obtained from them and the productivity of the process for obtaining said graphene platelets (4).

After obtaining the base paste (1), according to one of the embodiments of the invention in which stages a) and b) are performed independently, stage b) is performed, carrying out the fragmentation, intercalation, and exfoliation of the carbon nanofibers (1.1) that form the base paste (1) obtained in stage a) by a combined application of shear and compressive strengths, to obtain a modified base paste (2) that comprises graphene platelets (4).

In addition, as a result of this stage b), the modified base paste (2) can comprise other substances, such as carbon nanofibers (1.1), intercalated carbon nanofibers (1.1) or intercalant powder that has not been introduced in the interior of the carbon nanofibers (1.1).

One of the consequences of stage b) is the fragmentation of the carbon nanofibers (1.1) due to the shear and compressive strengths to which they are subjected.

In addition, in stage b) these strengths also produce the intercalation of the carbon nanofibers (1.1), after which the intercalant powder (1.2) is introduced in the interplanar spaces between the graphitic layers of the carbon nanofibers (1.1) through their basal plane edges (1.1.1), occupying and separating the interplanar spaces and aiding the subsequent exfoliation of the carbon nanofibers (1.1).

The presence of the first ligand liquid (1.3) that forms the base paste (1) in a sufficient amount improves the contact between the solid materials (1.1, 1.3) that form the base paste, allowing the intercalant powder (1.2) to be introduced and adsorbed in the graphitic layers of the carbon nanofibers (1.1) due to its affinity to graphene.

In addition, the compressive and shear strengths to which the carbon nanofibers (1.1) are subjected allow introducing said intercalant powder (1.2) in the carbon nanofibers (1.1), which are fragmented when the materials are in contact, that is, when intercalation occurs.

The execution of this stage of the process involving the intercalation of the carbon nanofibers (1.1) using the intercalant powder (1.2) that forms the base paste (1), is essential, as it allows the subsequent exfoliation and the subsequent formation of the graphene platelets (4) to be carried out with a much lower energy contribution than that needed without this stage, as well as using methods that are less aggressive, such as those in which oxidising reactions take place.

The consequence of this is that the graphitic layers of the carbon nanofibers (1.1) will not degrade structurally in the exfoliation stage. This non-degradation of the graphitic layers of the carbon nanofibers (1.1) means that high-quality graphene platelets (4) are obtained, as well as increasing the productivity of the process for obtaining them.

Finally, in stage b) the carbon nanofibers (1.1) that form part of the base paste (1) are exfoliated.

This exfoliation process in which the graphitic layers that form the carbon nanofibers (1.1) are separated is performed with a reduced energy contribution, as the intercalant powder (1.2) has already weakened the forces that keep the graphitic layers together.

This exfoliation process allows obtaining a modified base paste (2) comprising graphene platelets (4) with a number of stacked graphitic layers under 9.
The exfoliation process may not be completed in this stage b) of the process, so that although graphene platelets (4) are already obtained in this stage, the exfoliation process may continue in a subsequent stage of the process, stage d), increasing the total amount of graphene platelets (4) obtained in the process.

To perform said stage b) it is possible to use a grinder, an ultracentrifuge mill, a beater mill, a rotor mill, a cutting mill, a knife mill, a mortar mill, a disc mill, a mixing mill, a ball mill, a vibrant ball mill, or a planetary ball mill.

As stated above, stages a) and b) can be performed simultaneously, for example by a direct dosing of the materials (1.1, 1.2, 1.3) that will form the base paste (1) inside the aforementioned mills, so that a first mixing stage of the materials takes place followed by the stage of fragmentation, intercalation and exfoliation of the base paste (1).

When stage b) is completed, stage c) is performed, which consists of adding a second liquid (3) to the modified base paste (2) that comprises the graphene platelets (4) to obtain a dispersion of graphene platelets (5) in said second liquid (3).

The graphene platelet dispersion (5) in a second liquid (3) favours the dispersion of the graphene platelets (4) that form part of the modified base paste (2). In this way, the energy applied in a subsequent stage, stage d), reaches all the graphene platelets (4) and thus homogenises the graphene platelet dispersion (5) in a second liquid, favouring their dispersion.

On another hand, the second liquid (3) acts as a transmission medium for the energy supplied in stage d), thereby favouring the transmission of this energy to allow homogenising the graphene platelet dispersion (5) in a second liquid (3) during stage d) of the production process.

On another hand, said second liquid (3) stops the graphene platelets (4) from joining again after they have been exfoliated, due to the affinity between said second liquid (3) and the graphitic materials. In this way, graphene platelets (4) in dispersion are more stable than agglomerated graphene platelets (4), preventing the attraction between them and consequently their agglomeration.

The second liquid (3) used to obtain a graphene platelet dispersion (5) has an affinity to the intercalant powder (1.2) lower than that of the latter to the graphitic layers of the carbon nanofibers, that is, the energy of solvation of the intercalant powder (1.2) in the first liquid (3) is less than the energy of adsorption of the intercalant powder (1.2) in the graphitic layers that form the graphene platelets (4).

Said second liquid (3) has a surface tension, γ_{L}, with a value from 20 to 35 mJ/m² and a Hildebrand solubility parameter, δ_{T}, with a value from 18 to 30 MPa^{1/2} (equivalent to j/cm³; 2.0455 x (cal/cc)^{1/2} at 25°C.

In view of these properties, some examples of liquids that can be used as the second liquid (3) are N,N-dimethylformamide (DMF), tetrahydrofuran (THF) and isopropanol (IPA).

After obtaining the graphene platelet dispersion (5) in the second liquid (3), stage d) of the process is carried out, consisting of supplying energy by a physical process to the dispersion of graphene platelets (4) in said second liquid (3) to obtain a uniform dispersion of graphene platelets (5) in said second liquid (3).

This stage of the process is meant to homogenise and stabilise the dispersion of the graphene platelets (4) that form part of the modified base paste (2) and which are agglomerated in the second liquid (3) to obtain a uniform dispersion of graphene platelets (6) in said second liquid (3).

Said dispersion is obtained using physical means, such as by sonication or mechanical stirring.

As stated above, the presence of the second liquid (3) allows dispersing the graphene platelets (4) while also enhancing the propagation of the energy supplied in this stage.

In this way, the homogenisation of the dispersion is completed successfully obtaining a uniform and stable dispersion of graphene platelets (6) in the second liquid (3).

In addition, stage d) can include an additional exfoliation of the intercalated carbon nanofibers (1.1), which have not been completely exfoliated in stage b) of the process.

As stated above, having the graphene platelets (4) dispersed in a second liquid (3) prevents them from aggregating.

Optionally, it is possible to reduce the amount of intercalant powder (1.2) used in the process that is still present in the uniform dispersion of graphene platelets (6) in a second liquid (3) to the required levels according to the subsequent applications of the uniform dispersion of graphene platelets (6) in the second liquid (3).

To do so, an additional stage h) can be performed consisting of washing said homogenous dispersion of graphene platelets (6) in the second liquid (3) through a filter and using a third liquid (8) to obtain a third dispersion of graphene platelets (7) in said third liquid (8) with a small amount of intercalant powder (1.2).

In this stage the intercalant powder (1.2) is almost completely eliminated, leaving as little as 8% of the total dry mass formed by the graphene platelets (4) and other possible residual materials obtained in the process.

The filter used in this stage h) allows collecting the graphene platelets (4) and letting the intercalant powder (1.2) pass.

Said stage h) consists of adding a third liquid (8) to the uniform dispersion of graphene platelets (6) in a second liquid (3). The resulting mixture is made to pass through the filter so that the intercalant powder (1.2) together with part of the second liquid (3) and the third liquid (8) cross the filter, and the graphene platelets (4) are trapped by the filter together with the remaining second and third liquids (3 and 8), forming a modified uniform dispersion of graphene platelets (7), so that the proportion of the third liquid (8) with respect to the second liquid (3) present in the modified uniform dispersion of graphene platelets (7) increases as the recirculation progresses.

After recovering the graphene platelets (4) of the uniform dispersion of graphene platelets (6) in a second liquid (3), a third dispersion of graphene platelets (7) in the third liquid (8) is obtained.

In this case, the third liquid (8) presents an affinity to the intercalant powder (1.2) greater than that of the latter to the graphitic layers of the graphene platelets (4), that is, the energy of solvation of the intercalant powder (1.2) in said liquid is greater than the energy of adsorption of the intercalant powder (1.2) in the graphitic layers.

In this way, the intercalant powder (1.2) present in the graphene platelets (4) can be carried away by the third liquid (8) and thus removed from the dispersion.

The third liquid (8) used to carry away the intercalant powder (1.2) can be, for example, N,N-dimethylformamide (DMF), tetrahydrofuran (THF) or isopropanol (IPA).

Alternatively to stage h) for obtaining a modified uniform dispersion of graphene platelets (7), a stage i) can be performed to obtain a coating (9) for a support (10) with graphene platelets (4).

This coating is performed by placing the uniform dispersion of graphene platelets (6) in a second liquid (3) on a support (10). An evaporation operation of the second liquid (3) is then performed. This provides a coating for a support (10) with graphene platelets (4) and intercalant powder (1.2).

Then, to eliminate the intercalant powder (1.2) deposited on the support (10), it is possible to wash said coating of the support (10) for graphene platelets (4) and intercalant powder (1.2) with a fourth liquid (not shown) in order to carry away the intercalant powder (1.2).

To do so it is convenient that the liquid used allows dissolving the intercalant powder (1.2).

In this way a coating (9) is obtained for a support with graphene platelets (4) in which the intercalant powder (1.2) is almost completely eliminated, leaving as little as 8% of the total dry mass formed by the graphene platelets (4) and other possible residual materials obtained in the process.

As for the third liquid (8), the fourth liquid used has an affinity to the intercalant powder (1.2) greater than that of the latter to the graphitic layers of the graphene platelets (4), that is, the energy of solvation of the intercalant powder (1.2) in said liquid is greater than the energy of adsorption of the intercalant powder (1.2) in the graphitic layers. In this way the intercalant powder (1.2) present in the coating (9) can be carried away by the fourth liquid.

The fourth liquid used to carry the intercalant powder (1.2) is preferably water at a temperature above 80°C. Alternatively, it is possible to use N,N-dimethylformamide (DMF), tetrahydrofuran (THF) or isopropanol (IPA).

The process of the invention produces graphene platelets (4) with a low number of layers, on one hand because the number of graphitic layers of the precursor material, the carbon nanofibers (1.1), is already low, and on the other hand because of the combined effect of using the intercalant powder (1.2) and the first liquid (1.3) in stage b).

Equally, the number of structural defects in the graphene platelets (4) obtained is low due to the low degradation of these platelets resulting from the combined effect of using a precursor material, the carbon nanofibers (1.1), with a low number of structural defects and an exfoliation method that is not very aggressive.

This low degradation reduces the fragmentation of the graphitic layers of the carbon nanofibers (1.1), resulting in larger graphene platelets.

According to these features, figure 4 represents a TEM image of the graphene platelets (4) obtained, showing the size of said graphene platelets (4) and their transparency associated to a low number of layers and a low number of structural defects.

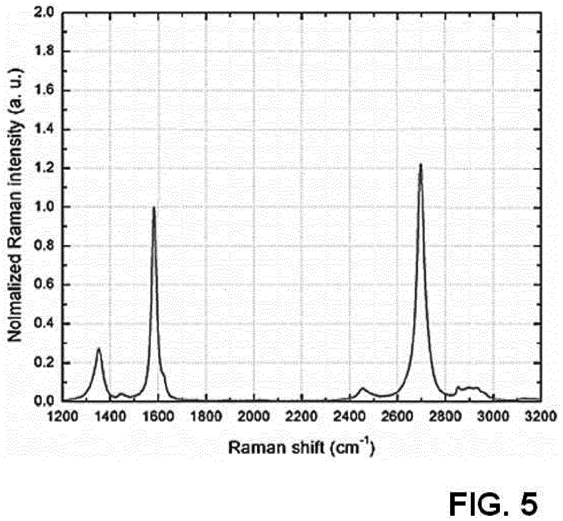

The Raman spectrum shown in figure 5 is used to characterise said graphene platelets (4).

As can be seen in said figure 5, the graphene platelets (4) obtained by the process of the invention correspond to a Raman spectrum characterised by having 3 peaks:
- A G peak characteristic of graphitic materials, located in an interval from 1500 to 1700 cm⁻¹,
- A D peak characteristic of carbonaceous materials with a maximum value that is proportional to the number of structural defects of the graphitic layers, located in an interval of 1200 to 1400 cm⁻¹,
- A 2D peak characteristic of graphitic materials proportional to the number of graphitic layers, such that its maximum value increases the fewer the number of graphitic layers, located in an interval from 2600 to 2800 cm⁻¹,
where the ratio of the maximum value of the D peak with respect to that of the G peak is from 0.14 to 0.95 and the ratio of the maximum value of the G peak with respect to that of the 2D peak is from 0.25 to 4.

## Claims

1. Process for obtaining a uniform dispersion of graphene platelets in a liquid, said process comprising the following stages:
a) obtaining a base paste (1) by arranging and dosing the following materials:
i. carbon nanofibers (1.1) in the form of dry powder, the structure of which comprises a continuous helical graphitic ribbon developing a spiral around and along the main axis s of each carbon nanofiber (1.1), where said ribbon is formed by a stacking of less than eleven graphitic layers,
ii. intercalant powder (1.2),
iii. a first ligand liquid (1.3),
where the upper limit of the liquid-solid ratio expressed as ml of liquid per mg of solid is 0.5 ml for every 1 mg and the lower limit of the liquid-solid ratio expressed as ml of liquid per mg of solid is 0.01 ml for every 1 mg,
b) fragmenting, intercalating and exfoliating the carbon nanofibers (1.1) that form the base paste (1.1) obtained in stage a), by a combined application of compressive and shear strengths to obtain a modified base paste (2) that comprises graphene platelets (4),
c) adding a second liquid (3) to the modified base paste (2) that comprises graphene platelets (4) to obtain a dispersion of graphene platelets (5) in said second liquid (3),
d) providing energy by a physical process to the dispersion of graphene platelets (4) in said second liquid (3) obtained in stage c), to obtain an uniform graphene platelet dispersion (6) in a second liquid (3) wherein said second liquid (3):
∘ acts as a transmission medium for the energy supplied in stage d), thereby favouring the transmission of this energy to allow homogenising the graphene platelet dispersion (5) in a second liquid (3) and,
∘ stops the graphene platelets (4) from joining again after they have been exfoliated, due to the affinity between said second liquid (3) and the graphitic materials in such a way that the graphene platelets (4) in dispersion are more stable than agglomerated graphene platelets (4), preventing the attraction between them and consequently their agglomeration,
wherein
the intercalant powder (1.2):
• is introduced between the graphitic layers that form them and by their basal plane edges (1.1.1) in order to exfoliate carbon nanofibers (1.1),
• has an energy of adsorption with respect to the carbon nanofibers (1.1) greater than that of benzene with respect to said carbon nanofibers (1.1),
the first ligand liquid (1.3):
• is such that the energy of solvation of the intercalant powder (1.2) in the first liquid (1.3) is lower than the energy of adsorption of the intercalant powder (1.2) in the graphitic layers of the carbon nanofibers (1.1), that is, the first liquid (1.3) exhibits a lower affinity for the intercalant powder (1.2) than that of the latter for the graphitic layers of the carbon nanofibers (1.1),
• has a surface tension, γL, with a value from 20 to 35 mJ/m2 and a Hildebrand solubility parameter, δT, with a value from 18 to 30 MPa1/2 at 25°C,
the second liquid (3):
• has an affinity to the intercalant powder (1.2) lower than that of the latter to the graphitic layers of the carbon nanofibers, that is, the energy of solvation of the intercalant powder (1.2) in the first liquid (3) is less than the energy of adsorption of the intercalant powder (1.2) in the graphitic layers that form the graphene platelets (4),
• has a surface tension, γL, with a value from 20 to 35 mJ/m2 and a Hildebrand solubility parameter, δT, with a value from 18 to 30 MPa1/2 (equivalent to j/cm3; 2.0455 x (cal/cc) 1/2 at 25°C,
an wherein the graphene platelets (4) of the uniform graphene platelet dispersion (6) in a second liquid (3) obtained in stage d) corresponding to a Raman spectrum that includes:
- a G peak,
- a D peak,
- a 2D peak,
where the ratio of the maximum value of the D peak with respect to that of the G peak is from 0.14 to 0.95 and the ratio of the maximum value of the G peak with respect to that of the 2D peak is from 0.25 to 4.

2. Process for obtaining a uniform dispersion of graphene platelets in a liquid according to claim 1 wherein the carbon nanofibers (1.1) are obtained by the following process:
e) dosing at least the following compounds (11):
i. a hydrocarbon or mixture of hydrocarbons,
ii. a nickel compound and a sulphur compound to generate catalytic particles,
iii. a carrier gas,
f) introducing the dosed compounds (11) listed in stage a) in a furnace (12) at a working temperature from 900°C to 1500°C, where a chemical vapour deposition process is performed on the catalytic particles dispersed in the carrier gas using the floating catalyst method, to obtain the carbon nanofibers (1.1) in the form of dry powder.

3. Process for obtaining a uniform dispersion of graphene platelets in a liquid according to claim 1, wherein the carbon nanofibers (1.1) are subjected to a preliminary stage g) consisting of a heat treatment of the carbon nanofibers (1.1) exposing them to a temperature of 1500°C to 3000°C, in an inert atmosphere, for purification, defunctionalisation and crystallisation of said graphitic material, resulting in a modified structure in which the number of carbon-carbon bonds is increased with respect to the number of said bonds present in the initial carbon nanofibers (1.1).

4. Process for obtaining a uniform dispersion of graphene platelets in a liquid according to claim 1, wherein the ratio of carbon nanofibers (1.1) to intercalant powder (1.2) expressed in mg has an upper limit of 1 mg of carbon nanofibers (1.1) for every 50 mg of intercalant powder (1.2) and a lower limit of 1 mg of carbon nanofibers (1.1) for every 0.5 mg of intercalant powder (1.2).

5. Process for obtaining a uniform dispersion of graphene platelets in a liquid according to claim 1, wherein the intercalant powder (1.2) is an aromatic heterocyclic compound.

6. Process for obtaining a uniform dispersion of graphene platelets in a liquid according to claim 5, wherein the intercalant powder (1.2) comprises a compound selected from the group of triaminopyrimidines, pyrenes, porphyrins, perylenes, triazines or any of their derivative compounds.

7. Process for obtaining a uniform dispersion of graphene platelets in a liquid according to claim 5 wherein the intercalant powder (1.2) comprises a compound selected from the group of melamines, functionalised melamines or a complex of triaminopyrimidines with a derivative of barbituric acid.

8. Process for obtaining a uniform dispersion of graphene platelets in a liquid according to claim 1, wherein the modified base paste (2) also comprises intercalated carbon nanofibers (1.1) and intercalant powder (1.2).

9. Process for obtaining a uniform dispersion of graphene platelets in a liquid according to claim 1, wherein the stage b) of the process is performed using a grinder, an ultracentrifuge mill, a beater mill, a rotor mill, a cutting mill, a knife mill, a mortar mill, a disc mill, a mixing mill, a ball mill, a vibrant ball mill, or a planetary ball mill.

10. Process for obtaining a uniform dispersion of graphene platelets in a liquid according to claim 8, wherein stage d) of the process comprises a process of additional exfoliation of the intercalated carbon nanofibers.

11. Process for obtaining a uniform dispersion of graphene platelets in a liquid according to claim 1, wherein the stage d) of the process is performed using physical methods selected from the group of sonication and mechanical stirring.

12. Process for obtaining a uniform dispersion of graphene platelets in a liquid according to claim 8, wherein after the stage d) a stage h) is performed that comprises washing through a filter the uniform dispersion of graphene platelets (6) in the second liquid (3) by using a third liquid (8) to obtain a modified uniform dispersion of graphene platelets (7) in said third liquid (8), where part of the intercalant powder (1.2) has been removed.

13. Process for obtaining a uniform dispersion of graphene platelets in a liquid according to claim 8, wherein after the stage d) a stage i) is performed to obtain a coating (9) for a support (10) with graphene platelets (4) and intercalant powder (1.2) performed by placing the uniform dispersion of graphene platelets (6) in a second liquid (3) on a support (10) and then by evaporating the second liquid (3).

14. Process for obtaining a uniform dispersion of graphene platelets in a liquid according to claim 13, wherein an additional washing process of said coating (9) of the support (10) for graphene platelets (4) and intercalant powder (1.2) with a fourth liquid in order to carry away the intercalant powder (1.2).

15. Process for obtaining a uniform dispersion of graphene platelets in a liquid according to claim 1, wherein the first liquid (1.3) is selected from the group of N,N-dimethylformamide, tetrahydrofuran and isopropanol.

16. Process for obtaining a uniform dispersion of graphene platelets in a liquid according to claims 12 or 14, wherein the third liquid (8) and the fourth liquid used are such that the energy of solvation of the intercalant powder (1.2) in the third liquid (8) and the energy of solvation of the intercalant powder (1.2) in the fourth liquid (8) are greater than the energy of adsorption of the intercalant powder (1.2) in the graphitic layers that form the graphene platelets (4), so that said third and fourth liquids exhibit a greater affinity for the intercalant powder (1.2) than that of the latter for the graphitic layers of the graphene platelets (4).

17. Process for obtaining a uniform dispersion of graphene platelets in a liquid according to claim 1 where peak G is located in an interval from 1500 to 1700 cm-1, peak D is located in an interval from 1200 to 1400 cm-1, and peak 2D is located in an interval from 2600 to 2800 cm-1.

## Patentansprüche

1. Verfahren zum Erhalten einer gleichförmigen Dispersion von Graphenplättchen in einer Flüssigkeit, wobei das Verfahren die folgenden Stufen umfasst:
a) Erhalten einer Basispaste (1) durch Anordnen und Dosieren der folgenden Materialien:
i. Kohlenstoffnanofasern (1.1) in Form von trockenem Pulver, dessen Struktur ein kontinuierliches wendelförmiges graphitisches Band umfasst, das eine Spirale um die Hauptachse s jeder Kohlenstoffnanofaser (1.1) herum und entlang dieser entwickelt, wobei das Band durch Stapeln von weniger als elf graphitischen Schichten gebildet wird,
ii. Interkalierungsmittelpulver (1.2),
iii. einer ersten Ligandenflüssigkeit (1.3),
wobei die Obergrenze des Flüssig-Feststoff-Verhältnisses, angegeben als ml Flüssigkeit pro mg Feststoff, 0,5 ml auf jeweils 1 mg beträgt und die Untergrenze des Flüssig-Feststoff-Verhältnisses, angegeben als ml Flüssigkeit pro mg Feststoff, 0,01 ml auf jeweils 1 mg beträgt,
b) Fragmentieren, Interkalieren (Schichtaufweitung) und Exfolieren (Schichttrennung) der Kohlenstoffnanofasern (1.1), welche die in Stufe a) erhaltene Basispaste (1.1) bilden, durch eine kombinierte Anwendung von Kompressions- und Scherkräften, um eine modifizierte Basispaste (2) zu erhalten, die Graphenplättchen (4) umfasst,
c) Zugeben einer zweiten Flüssigkeit (3) zu der modifizierten Basispaste (2), die Graphenplättchen (4) umfasst, um eine Dispersion von Graphenplättchen (5) in der zweiten Flüssigkeit (3) zu erhalten,
d) Bereitstellen von Energie an die Dispersion der Graphenplättchen (4) in der zweiten Flüssigkeit (3), die in Stufe c) erhalten wurde, mittels eines physikalischen Verfahrens, um eine gleichförmige Graphenplättchendispersion (6) in einer zweiten Flüssigkeit (3) zu erhalten, bei der die zweite Flüssigkeit (3)
∘ als Übertragungsmedium für die in Stufe d) zugeführte Energie wirkt, wodurch die Übertragung dieser Energie begünstigt wird, um die Homogenisierung der Graphenplättchendispersion (5) in einer zweiten Flüssigkeit (3) zu ermöglichen, und
∘ die Graphenplättchen (4) infolge der Affinität zwischen der zweiten Flüssigkeit (3) und den graphitischen Materialien davon abhält, erneut zusammenzukommen, nachdem sie exfoliert wurden, in einer solchen Weise, dass die Graphenplättchen (4) in Dispersion stabiler als agglomerierte Graphenplättchen (4) sind, wodurch die Anziehung zwischen ihnen und nachfolgend deren Agglomeration verhindert wird,
wobei
das Interkalierungsmittelpulver (1.2)
• zwischen die graphitischen Schichten, die sie bilden, und über ihre Basisebenenränder (1.1.1) eingebracht wird, um Kohlenstoffnanofasern (1.1) zu exfolieren,
• eine Adsorptionsenergie in Bezug auf die Kohlenstoffnanofasern (1.1) über derjenigen von Benzol in Bezug auf die Kohlenstoffnanofasern (1.1) aufweist,
die erste Ligandflüssigkeit (1.3)
• derart ist, dass die Solvatisierungsenergie des Interkalierungsmittelpulvers (1.2) in der ersten Flüssigkeit (1.3) unter der Adsorptionsenergie des Interkalierungsmittelpulvers (1.2) in den graphitischen Schichten der Kohlenstoffnanofasern (1.1) liegt, was bedeutet, dass die erste Flüssigkeit (1.3) eine niedrigere Affinität zu dem Interkaliernungsmittel (1.2) als das letztere zu den graphitischen Schichten der Kohlenstoffnanofasern (1.1) aufweist,
• eine Oberflächenspannung, γ_{L}, mit einem Wert von 20 bis 35 mJ/m² und einen Hildebrand'schen Löslichkeitsparameter, δ_{T}, mit einem Wert von 18 bis 30 MPa^{1/2} bei 25 °C aufweist,
die zweite Flüssigkeit (3)
• eine Affinität zu dem Interkalierungsmittelpulver (1.2) unter derjenigen des letzteren zu den graphitischen Schichten der Kohlenstoffnanophasern aufweist, was bedeutet, dass die Solvatisierungsenergie des Interkalierungsmittelpulvers (1.2) in der ersten Flüssigkeit (3) unter der Adsorptionsenergie des Interkalierungsmittelpulvers (1.2) in den graphitischen Schichten liegt, die die Graphenplättchen (4) bilden,
• eine Oberflächenspannung, γ_{L}, mit einem Wert von 20 bis 35 mJ/m2 und einen Hildebrand'schen Löslichkeitsparameter, δ_{T}, mit einem Wert von 18 bis 30 MPa^{1/2} bei 25 °C aufweist (entsprechend J/cm³; 2,0455 x (cal/cc)^{1/2} bei 25 °C),
und wobei die Graphenplättchen (4) der gleichförmigen Graphenplättchendispersion (6) in einer zweiten Flüssigkeit (3), erhalten in Stufe d), einem Raman-Spektrum entsprechen, das folgendes einschließt:
- einen G-Peak,
- einen D-Peak,
- einen 2D-Peak,
wobei das Verhältnis des Maximalwerts des D-Peaks in Bezug auf denjenigen des G-Peaks 0,14 bis 0,95 beträgt und das Verhältnis des Maximalwerts des G-Peaks in Bezug auf denjenigen des 2D-Peaks 0,25 bis 4 beträgt.

2. Verfahren zum Erhalten einer gleichförmigen Dispersion von Graphenplättchen in einer Flüssigkeit nach Anspruch 1, wobei die Kohlenstoffnanofasern (1.1) durch das folgende Verfahren erhalten werden:
e) Dosieren von mindestens den folgenden Verbindungen (11):
i. einem Kohlenwasserstoff oder einer Mischung von Kohlenwasserstoffen,
ii. einer Nickelverbindung und einer Schwefelverbindung, um katalytische Partikel zu generieren,
iii. einem Trägergas,
f) Einbringen der in Stufe a) aufgeführten dosierten Verbindungen (11) in einen Ofen (12) mit einer Arbeitstemperatur von 900 °C bis 1500 °C, wo ein chemisches Gasphasenabscheideverfahren mit den in dem Trägergas dispergierten katalytischen Partikeln unter Verwendung des Floating Catalyst-Verfahrens durchgeführt wird, um die Kohlenstoffnanofasern (1.1) in Form von trockenem Pulver zu erhalten.

3. Verfahren zum Erhalten einer gleichförmigen Dispersion von Graphenplättchen in einer Flüssigkeit nach Anspruch 1, wobei die Kohlenstoffnanofasern (1.1) einer Vorstufe g) ausgesetzt werden, die aus einer Wärmebehandlung der Kohlenstoffnanofasern (1.1) besteht, bei der sie zur Reinigung, Defunktionalisierung und Kristallisation des graphitischen Materials in einer inerten Atmosphäre einer Temperatur von 1500 °C bis 3000 °C ausgesetzt werden, was zu einer modifizierten Struktur führt, bei der die Anzahl der Kohlenstoff-Kohlenstoff-Bindungen in Bezug auf die Anzahl dieser Bindungen, die in den anfänglichen Kohlenstoffnanofasern (1.1) vorhanden sind, erhöht wird.

4. Verfahren zum Erhalten einer gleichförmigen Dispersion von Graphenplättchen in einer Flüssigkeit nach Anspruch 1, wobei das Verhältnis von Kohlenstoffnanofasern (1.1) zu Interkalierungsmittelpulver (1.2), ausgedrückt in mg, eine Obergrenze von 1 mg Kohlenstoffnanofasern (1.1) auf jeweils 50 mg Interkalierungsmittelpulver (1.2) und eine Untergrenze von 1 mg Kohlenstoffnanofasern (1.1) auf jeweils 0,5 mg Interkalierungsmittelpulver (1.2) aufweist.

5. Verfahren zum Erhalten einer gleichförmigen Dispersion von Graphenplättchen in einer Flüssigkeit nach Anspruch 1, wobei das Interkalierungsmittelpulver (1.2) eine aromatische heterocyclische Verbindung ist.

6. Verfahren zum Erhalten einer gleichförmigen Dispersion von Graphenplättchen in einer Flüssigkeit nach Anspruch 5, wobei das Interkalierungsmittelpulver (1.2) eine Verbindung ausgewählt aus der Gruppe von Triaminopyrimidinen, Pyrenen, Porphyrinen, Perylenen, Triazinen oder jedweder ihrer Derivatverbindungen umfasst.

7. Verfahren zum Erhalten einer gleichförmigen Dispersion von Graphenplättchen in einer Flüssigkeit nach Anspruch 5, wobei das Interkalierungsmittelpulver (1.2) eine Verbindung ausgewählt aus der Gruppe von Melaminen, funktionalisierten Melaminen oder einem Komplex von Triaminopyrimidinen mit einem Derivat von Barbitursäure umfasst.

8. Verfahren zum Erhalten einer gleichförmigen Dispersion von Graphenplättchen in einer Flüssigkeit nach Anspruch 1, wobei die modifizierte Basispaste (2) auch interkalierte Kohlenstoffnanofasern (1.1) und Interkalierungsmittelpulver (1.2) umfasst.

9. Verfahren zum Erhalten einer gleichförmigen Dispersion von Graphenplättchen in einer Flüssigkeit nach Anspruch 1, wobei die Stufe b) des Verfahrens mit einem Schleifer, einer Ultrazentrifugenmühle, einer Schlägermühle, einer Rotormühle, einer Schneidmühle, einer Messermühle, einer Mörsermühle, einer Scheibenmühle, einer Mischmühle, einer Kugelmühle, einer Schwingkugelmühle oder einer Planetenkugelmühle durchgeführt wird.

10. Verfahren zum Erhalten einer gleichförmigen Dispersion von Graphenplättchen in einer Flüssigkeit nach Anspruch 8, wobei Stufe d) des Verfahrens ein Verfahren der zusätzlichen Exfolierung der interkalierten Kohlenstoffnanofasern umfasst.

11. Verfahren zum Erhalten einer gleichförmigen Dispersion von Graphenplättchen in einer Flüssigkeit nach Anspruch 1, wobei die Stufe d) des Verfahrens unter Verwendung von physikalischen Verfahren ausgewählt aus der Gruppe von Schallbehandlung und mechanischem Rühren durchgeführt wird.

12. Verfahren zum Erhalten einer gleichförmigen Dispersion von Graphenplättchen in einer Flüssigkeit nach Anspruch 8, wobei nach der Stufe d) eine Stufe h) durchgeführt wird, die Waschen der gleichförmigen Dispersion von Graphenplättchen (6) in der zweiten Flüssigkeit (3) durch einen Filter unter Verwendung einer dritten Flüssigkeit (8) umfasst, um eine modifizierte gleichförmige Dispersion von Graphenplättchen (7) in der dritten Flüssigkeit (8) zu erhalten, wobei ein Teil des Interkalierungsmittelpulvers (1.2) entfernt worden ist.

13. Verfahren zum Erhalten einer gleichförmigen Dispersion von Graphenplättchen in einer Flüssigkeit nach Anspruch 8, wobei nach der Stufe d) eine Stufe i) durchgeführt wird, um eine Beschichtung (9) für einen Träger (10) mit Graphenplättchen (4) und Interkalierungsmittelpulver (1.2) zu erhalten, die durchgeführt wird, indem die gleichförmige Dispersion von Graphenplättchen (6) in einer zweiten Flüssigkeit (3) auf dem Träger (10) platziert wird und dann die zweite Flüssigkeit (3) verdampft wird.

14. Verfahren zum Erhalten einer gleichförmigen Dispersion von Graphenplättchen in einer Flüssigkeit nach Anspruch 13, wobei ein zusätzliches Waschverfahren der Beschichtung (9) auf dem Träger (10) für Graphenplättchen (4) und Interkalierungsmittelpulver (1.2) mit einer vierten Flüssigkeit durchgeführt wird, um das Interkalierungsmittelpulver (1.2) fortzutragen.

15. Verfahren zum Erhalten einer gleichförmigen Dispersion von Graphenplättchen in einer Flüssigkeit nach Anspruch 1, wobei die erste Flüssigkeit (1.3) ausgewählt ist aus der Gruppe von N,N-Dimethylformamid, Tetrahydrofuran und Isopropanol.

16. Verfahren zum Erhalten einer gleichförmigen Dispersion von Graphenplättchen in einer Flüssigkeit nach den Ansprüchen 12 bis 14, wobei die verwendete dritte Flüssigkeit (8) und die verwendete vierte Flüssigkeit so sind, dass die Solvatisierungsenergie des Interkalierungsmittelpulvers (1.2) in der dritten Flüssigkeit (8) und die Solvatisierungsenergie des Interkalierungsmittelpulvers (1.2) in der vierten Flüssigkeit (8) größer als die Adsorptionsenergie des Interkalierungsmittelpulvers (1.2) in den graphitischen Schichten sind, die die Graphenplättchen (4) bilden, so dass die dritte und vierte Flüssigkeit eine größere Affinität zu dem Interkalierungsmittelpulver (1.2) zeigen als das letztere zu den graphitischen Schichten der Graphenplättchen (4).

17. Verfahren zum Erhalten einer gleichförmigen Dispersion von Graphenplättchen in einer Flüssigkeit nach Anspruch 1, wobei sich Peak G in einem Intervall von 1500 bis 1700 cm⁻¹ befindet, Peak D in einem Intervall von 1200 bis 1400 cm⁻¹ befindet und Peak 2D in einem Intervall von 2600 bis 2800 cm⁻¹ befindet.

## Revendications

1. Procédé pour l'obtention d'une dispersion uniforme de plaquettes de graphène dans un liquide, ledit procédé comprenant les étapes suivantes :
a) obtenir une pâte de base (1) en agençant et dosant les matériaux suivants :
i. des nanofibres de carbone (1.1) sous la forme de poudre sèche, dont la structure comprend un ruban graphitique hélicoïdal continu développant une spirale autour et le long de l'axe principal s de chaque nanofibre de carbone (1.1), ledit ruban étant formé par un empilement de moins de 'onze couches graphitiques,
ii. une poudre d'intercalation (1.2),
iii. un premier liquide ligand (1.3),
la limite supérieure du rapport liquide/solide exprimé en ml de liquide par mg de solide étant 0,5 ml pour 1 mg et la limite inférieure du rapport liquide/solide exprimé en ml de liquide par mg de solide étant 0,01 ml pour 1 mg,
b) fragmenter, intercaler et exfolier les nanofibres de carbone (1.1) qui forment la pâte de base (1.1) obtenue à l'étape a), par une application combinée de forces de compression et de cisaillement afin d'obtenir une pâte de base modifiée (2) qui comprend des plaquettes de graphène (4),
c) ajouter un deuxième liquide (3) à la pâte de base modifiée (2) qui comprend des plaquettes de graphène (4) afin d'obtenir une dispersion de plaquettes de graphène (5) dans ledit deuxième liquide (3),
d) fournir de l'énergie par un processus physique à la dispersion de plaquettes de graphène (4) dans ledit deuxième liquide (3) obtenu à l'étape c), afin d'obtenir une dispersion de plaquettes de graphène uniforme (6) dans un deuxième liquide (3), dans lequel ledit deuxième liquide (3) :
o fait office de milieu de transmission pour l'énergie fournie à l'étape d), ce qui favorise la transmission de cette énergie pour permettre l'homogénéisation de la dispersion de plaquettes de graphène (5) dans un deuxième liquide (3) et,
o empêche les plaquettes de graphène (4) de se réunir une fois qu'elles ont été exfoliées, en raison de l'affinité entre ledit deuxième liquide (3) et les matériaux graphitiques de telle sorte que les plaquettes de graphène (4) dans la dispersion soient plus stables que les plaquettes de graphène (4) agglomérées, évitant l'attraction entre elles et par conséquent leur agglomération,
dans lequel
la poudre d'intercalation (1.2) :
• est introduite entre les couches graphitiques qui les forment et par leurs bords plans basaux (1.1.1) dans le but d'exfolier les nanofibres de carbone (1.1),
• a une énergie d'adsorption en ce qui concerne les nanofibres de carbone (1.1) supérieure à celle du benzène en ce qui concerne lesdites nanofibres de carbone (1.1),
le premier liquide ligand (1.3) :
• est tel que l'énergie de solvatation de la poudre d'intercalation (1.2) dans le premier liquide (1.3) est inférieure à l'énergie d'adsorption de la poudre d'intercalation (1.2) dans les couches graphitiques des nanofibres de carbone (1.1), à savoir, le premier liquide (1.3) montre une affinité pour la poudre d'intercalation (1.2) inférieure à celle de cette dernière pour les couches graphitiques des nanofibres de carbone (1.1),
• a une tension de surface, γL, ayant une valeur de 20 à 35 mJ/m² et un paramètre de solubilité d'Hildebrand, δT, ayant une valeur de 18 à 30 MPa^{1/2} à 25 °C,
le deuxième liquide (3) :
• présente une affinité avec la poudre d'intercalation (1.2) inférieure à celle de cette dernière avec les couches graphitiques des nanofibres de carbone, à savoir, l'énergie de solvatation de la poudre d'intercalation (1.2) dans le premier liquide (3) est inférieure à l'énergie d'adsorption de la poudre d'intercalation (1.2) dans les couches graphitiques qui forment les plaquettes de graphène (4),
• a une tension de surface, γL, ayant une valeur de 20 à 35 mJ/m² et un paramètre de solubilité d'Hildebrand, δT, ayant une valeur de 18 à 30 MPa^{1/2} à 25 °C (équivalent à J/cm³ ; 2,0455 x (cal/cm³)^{1/2} à 25 °C,
et dans lequel les plaquettes de graphène (4) de la dispersion de plaquettes de graphène uniforme (6) dans un deuxième liquide (3) obtenu à l'étape d) correspondent à un spectre de Raman qui comprend :
- un pic G,
- un pic D,
- un pic 2D,
où le rapport de la valeur maximale du pic D à celle du pic G va de 0,14 à 0,95 et le rapport de la valeur maximale du pic G à celle du pic 2D va de 0,25 à 4.

2. Procédé pour l'obtention d'une dispersion uniforme de plaquettes de graphène dans un liquide selon la revendication 1 dans lequel les nanofibres de carbone (1.1) sont obtenues par le procédé suivant :
e) doser au moins les composés (11) suivants :
i. un hydrocarbure ou un mélange d'hydrocarbures,
ii. un composé nickel et un composé sulfure pour générer des particules catalytiques,
iii. un gaz porteur,
f) introduire les composés (11) dosés énumérés à l'étape a) dans un four (12) à une température de fonctionnement de 900 °C à 1 500 °C, où un procédé de dépôt chimique en phase vapeur est réalisé sur les particules catalytiques dispersées dans le gaz porteur à l'aide du procédé avec catalyseur flottant, pour obtenir les nanofibres de carbone (1.1) sous la forme d'une poudre sèche.

3. Procédé pour l'obtention d'une dispersion uniforme de plaquettes de graphène dans un liquide selon la revendication 1, dans lequel les nanofibres de carbone (1.1) sont soumises à une étape g) préliminaire consistant en un traitement thermique des nanofibres de carbone (1.1) les exposant à une température de 1 500 °C à 3 000 °C, dans une atmosphère inerte, pour purification, défonctionnalisation et cristallisation dudit matériau graphitique, ce qui permet d'obtenir une structure modifiée dans laquelle le nombre de liaisons carbone-carbone est accru par rapport au nombre desdites liaisons dans les nanofibres de carbone (1.1) initiales.

4. Procédé pour l'obtention d'une dispersion uniforme de plaquettes de graphène dans un liquide selon la revendication 1, dans lequel le rapport des nanofibres de carbone (1.1) à la poudre d'intercalation (1.2) exprimé en mg a une limite supérieure de 1 mg de nanofibres de carbone (1.1) pour 50 mg de poudre d'intercalation (1.2) et une limite inférieure de 1 mg de nanofibre de carbone (1.1) pour 0,5 mg de poudre d'intercalation (1.2).

5. Procédé pour l'obtention d'une dispersion uniforme de plaquettes de graphène dans un liquide selon la revendication 1, dans lequel la poudre d'intercalation (1.2) est un composé hétérocyclique aromatique.

6. Procédé pour l'obtention d'une dispersion uniforme de plaquettes de graphène dans un liquide selon la revendication 5, dans lequel la poudre d'intercalation (1.2) comprend un composé choisi dans le groupe des triaminopyrimidines, pyrènes, porphyrines, pérylènes, triazines ou un quelconque de leurs composés dérivés.

7. Procédé pour l'obtention d'une dispersion uniforme de plaquettes de graphène dans un liquide selon la revendication 5, dans lequel la poudre d'intercalation (1.2) comprend un composé choisi dans le groupe des mélamines, mélamines fonctionnalisées ou un complexe de triaminopyrimidines avec un dérivé d'acide barbiturique.

8. Procédé pour l'obtention d'une dispersion uniforme de plaquettes de graphène dans un liquide selon la revendication 1, dans lequel la pâte de base modifiée (2) comprend également des nanofibres de carbone (1.1) intercalées et la poudre d'intercalation (2).

9. Procédé pour l'obtention d'une dispersion uniforme de plaquettes de graphène dans un liquide selon la revendication 1, dans lequel l'étape b) du procédé est effectuée à l'aide d'un broyeur, d'un broyeur ultracentrifugeur, d'un broyeur à marteaux, d'un broyeur à rotor, d'un broyeur à couteaux, d'un broyeur à mortier, d'un broyeur à disque, d'un broyeur mélangeur, d'un broyeur à billes, d'un broyeur à billes vibrant ou d'un broyeur à billes planétaire.

10. Procédé pour l'obtention d'une dispersion uniforme de plaquettes de graphène dans un liquide selon la revendication 8, dans lequel l'étape d) du procédé comprend un procédé d'exfoliation supplémentaire des nanofibres de carbone (1.1) intercalées.

11. Procédé pour l'obtention d'une dispersion uniforme de plaquettes de graphène dans un liquide selon la revendication 1, dans lequel l'étape d) du procédé est effectuée à l'aide de procédés physiques choisis dans le groupe comprenant la sonication et l'agitation mécanique.

12. Procédé pour l'obtention d'une dispersion uniforme de plaquettes de graphène dans un liquide selon la revendication 8, dans lequel on effectue après l'étape d) une étape h) qui comprend le lavage à travers un filtre de la dispersion uniforme des plaquettes de graphène (6) dans le deuxième liquide (3) en utilisant un troisième liquide (8) pour obtenir une dispersion uniforme modifiée des plaquettes de graphène (7) dans ledit troisième liquide (8), où une partie de la poudre d'intercalation (1.2) a été retirée.

13. Procédé pour l'obtention d'une dispersion uniforme de plaquettes de graphène dans un liquide selon la revendication 8, dans lequel on effectue après l'étape d) une étape i) pour obtenir un revêtement (9) pour un support (10) avec des plaquettes de graphène (4) et une poudre d'intercalation (1.2) réalisée en plaçant la dispersion uniforme de plaquettes de graphène (6) dans un deuxième liquide (3) sur un support (10), puis en évaporant le deuxième liquide (3).

14. Procédé pour l'obtention d'une dispersion uniforme de plaquettes de graphène dans un liquide selon la revendication 13, dans lequel un procédé de lavage supplémentaire dudit revêtement (9) du support (10) pour les plaquettes de graphène (4) et la poudre d'intercalation (1.2) avec un quatrième liquide permet d'éliminer la poudre d'intercalation (1.2).

15. Procédé pour l'obtention d'une dispersion uniforme de plaquettes de graphène dans un liquide selon la revendication 1, dans lequel le premier liquide (1.3) est choisi dans le groupe consistant en N,N-diméthylformamide, tétrahydrofurane et isopropanol.

16. Procédé pour l'obtention d'une dispersion uniforme de plaquettes de graphène dans un liquide selon les revendications 12 ou 14, dans lequel le troisième liquide (8) et le quatrième liquide utilisés sont tels que l'énergie de solvatation de la poudre d'intercalation (1.2) dans le troisième liquide (8) et l'énergie de solvatation de la poudre d'intercalation (1.2) dans le quatrième liquide (8) soient supérieures à l'énergie d'adsorption de la poudre d'intercalation (1.2) dans les couches graphitiques qui forment les plaquettes de graphène (4), de sorte que lesdits troisième et quatrième liquides montrent une affinité pour la poudre d'intercalation (1.2) supérieure à celle de cette dernière pour les couches graphitiques des plaquettes de graphène (4).

17. Procédé pour l'obtention d'une dispersion uniforme de plaquettes de graphène dans un liquide selon la revendication 1 dans lequel le pic G est situé dans un intervalle de 1 500 à 1 700 cm⁻¹, le pic D est situé dans un intervalle de 1 200 à 1 400 cm⁻¹ et le pic 2D est situé dans un intervalle de 2 600 à 2 800 cm⁻¹.
